## Europäisches Patentamt
## European Patent Office
## Office européen des brevets

(19)

(11) Veröffentlichungsnummer: **0 008 350**
**A1**

(12) # EUROPÄISCHE PATENTANMELDUNG

(21) Anmeldenummer: **79102352.6**

(22) Anmeldetag: **09.07.79**

(51) Int. Cl.³: **H 04 N 7/14**

(30) Priorität: **23.08.78 DE 2836884**

(43) Veröffentlichungstag der Anmeldung:
**05.03.80 Patentblatt 80/5**

(84) Benannte Vertragsstaaten:
**AT CH DE FR GB IT SE**

(71) Anmelder: **SIEMENS AKTIENGESELLSCHAFT Berlin und München**
**Postfach 261**
**D-8000 München 22(DE)**

(72) Erfinder: **Grimm, Michael**
**Hanfstaeglstrasse 1**
**D-8000 München 19(DE)**

(72) Erfinder: **Walter, Rolf Klaus**
**Treffauer Strasse 50**
**D-8000 München 70(DE)**

(72) Erfinder: **Krämer, Herbert**
**Fasanenweg 6**
**D-8080 Fürstenfeldbruck(DE)**

(54) **Bildfernsprechstelle.**

(57) Für Bildfernsprech-Konferenzen ist eine Bildfernsprechstelle mit mehreren Teilnehmerplätzen nach der Erfindung als kompakte Anschlußeinheit in einem Tisch mit runder Platte (1) eingebaut. Die Teilnehmerplätze sind in sektorförmigen Bereichen (10) der Tischplatte, gleichmäßig auf ihren Umfang verteilt, angeordnet. Über der Tischplatte befinden sich, in deren mittlerem Bereich, den Teilnehmerplätzen zugeordnete Bildgeräte (4). Die Bildschirme (5) sind für die gleichzeitige Wiedergabe mehrerer Bilder in eine entsprechende Anzahl gleich großer, annähernd quadratischer Teil-Bildflächen unterteilbar. Der Mittelfuß (2) des Tisches ist als Hohlkörper gestaltet und nimmt gemeinsame Einrichtungen der Anschlußeinheit auf.

FIG 1

EP 0 008 350 A1

- 1 -

SIEMENS AKTIENGESELLSCHAFT          Unser Zeichen
Berlin und München                  VPA 78 P 6175 EUR

Bildfernsprechstelle

Die Erfindung betrifft eine als Anschlußeinheit für Bildfernsprech-Konferenzeinrichtungen gestaltete Bildfernsprechstelle mit einem Tisch mit mehreren Teilnehmerplätzen, weiterhin mit Einrichtungen zur Bildaufnahme und -wiedergabe, zur Tonaufnahme und -wiedergabe, zur Übertragung von Bild und Ton, zur Steuerung und Stromversorgung sowie zur manuellen Bedienung, und mit einer internen Verkabelung. Mittels derartiger, über Bildfernsprech-Leitungen miteinander verbindbarer Bildfernsprechstellen ist es möglich, bei Fernsprechkonferenzen gleichzeitig einen optischen Kontakt zwischen den Konferenzteilnehmern an voneinander entfernten Orten herzustellen.

Bildfernsprechstellen für Konferenzzwecke wurden bereits verschiedentlich von ausländischen Telefonbetriebsgesellschaften eingerichtet und werden gegen Ge-

Mur 1 Hus / 22.08.1978

bühr zur Verfügung gestellt. Die fernmeldetechnischen Einrichtungen sind dazu jeweils in einem akustisch und beleuchtungstechnisch darauf abgestimmten Raum untergebracht, wo auch ausreichend Sitzgelegenheit und Ablagemöglichkeit bereitgestellt ist.

Die Teilnehmer sind in bekannten Bildfernsprechstellen jeweils an einer Längskante eines langgestreckten Tisches, gegenüber der in einigem Abstand vom Tisch installierten Bildaufnahme- und -wiedergabeeinrichtung placiert. Alle Teilnehmer haben so den Bildschirm vor sich und werden gleichzeitig von der Aufnahmekamera erfaßt. Auf die Bildschirme von zwei miteinander verbundenen, derartigen Bildfernsprechstellen wird bei einer Bildfernsprechkonferenz jeweils eine Abbildung der Teilnehmer der Gegenstelle in Originalsitzordnung übermittelt. Weiterhin stehen den Teilnehmern gemeinsam Mikrofone und Lautsprecher einer Freisprecheinrichtung zur Verfügung.

Für das Herstellen der Konferenzverbindung und weitere zentrale Bedienungsaufgaben ist ein separat gelegener Bedienungsplatz vorgesehen, von dem aus eine mit der Konferenzeinrichtung vertraute Bedienungsperson die Anlage steuert. Ein weiterer, separat gelegener Platz mit einer beleuchteten Ablagefläche und einer auf diese Fläche gerichteten Aufnahmekamera steht den Konferenzteilnehmern gemeinsam bedarfsweise zur Verfügung um Dokumente zu übermitteln.

Die Anordnung sämtlicher Teilnehmerplätze in gerader Linie nebeneinander ist nun für die Kommunikation der an einer Bildfernsprechstelle zusammensitzenden Konferenzteilnehmer nicht besonders günstig. Auch für die Abbildung der Teilnehmer auf dem Bildschirm erscheint diese Sitzordnung nicht optimal, da der Bildschirm in seiner Gesamtfläche schlecht ausgenutzt und die Gesichter der einzelnen Teilnehmer durch die Kleinheit der Darstellung kaum erkennbar sind.

Ein weiterer Nachteil der bekannten Anordnung wird darin gesehen, daß ständig eine mit der Anlage vertraute, aber nicht als Konferenzteilnehmer beteiligte Bedienungsperson zugegen sein muß, wodurch der Betrieb der Anlage verteuert wird. Auch die separate Anordnung des Platzes zur Übermittlung von Dokumenten erscheint ungünstig, da durch den jeweils erforderlichen Platzwechsel eines Konferenzteilnehmers Unruhe geschaffen wird.

Der Erfindung liegt die Aufgabe zugrunde, den genannten Nachteilen der beschriebenen, bekannten Bildfernsprechstelle abzuhelfen und durch eine entsprechende konstruktive Anordnung und elektrische Steuerung der fernmeldetechnischen Einrichtungen eine Bildfernsprechstelle für mehrere Teilnehmer zu schaffen, die eine kommunikationsfreundliche Sitzordnung, optimale Nutzung der Bildschirmfläche und unmittelbaren Zugang zu den gemeinsamen Einrichtungen der Bildfernsprechstelle von jedem Platz aus ermöglicht.

Diese Aufgabe ist erfindungsgemäß dadurch gelöst, daß die Teilnehmerplätze in gleichmäßig auf den Umfang des Tisches verteilten Bereichen einer vorzugsweise runden Tischplatte eingerichtet und mehrere Geräte für die Bildaufnahme und -wiedergabe im mittleren Bereich über der Tischplatte, den Teilnehmerplätzen zugeordnet, installiert sind, und daß mit den Bildwiedergabegeräten, durch Unterteilung des Bildschirms in eine Anzahl gleich großer, annähernd quadratischer Teilflächen, jeweils sämtliche von den einzelnen Teilnehmerplätzen einer Bildfernsprechstelle übermittelten Bilder gleichzeitig darstellbar sind.

Die Anordnung von Gesprächsteilnehmern um einen Tisch herum ist bekanntermaßen besonders kommunikationsfreundlich, aber nicht ohne weiteres in bekannter Weise für die Bildübermittelung aller Teilnehmer in Gesamtaufnahme an eine zweite derartige Bildfernsprechstelle geeignet. Durch die unmittelbare Zuordnung von Bildgeräten zu jedem Teilnehmerplatz und die Unterteilung der Bildschirmflächen für die gleichzeitige Wiedergabe mehrerer Einzelbilder wird die vorteilhafte Anordnung von Teilnehmern um einen Tisch herum gleichzeitig den Forderungen der Bildfernsprechtechnik für die Abhaltung von Bildfernsprechkonferenzen angepaßt. Jedem Teilnehmer einer ersten Bildfernsprechstelle stehen in diesem Falle die Porträts der Teilnehmer einer mit dieser verbundenen zweiten Bildfernsprechstelle, bei optimaler Nutzung der Bildschirmfläche, deutlich sichtbar gegenüber.

Diese Anordnung der Teilnehmerplätze ermöglicht auf vorteilhafter Weise den Zusammenbau und die Verkabelung sämtlicher für eine Bildfernsprechstelle erforderlicher, fernmeldetechnischer Geräte und Einrichtungen im Teilnehmertisch zu einer kompakten Anschlußeinheit. Der Tisch kann dazu nach einer Weiterbildung der Erfindung einen als Hohlkörper mit wenigstens einer abnehmbaren Seitenfläche ausgebildeten Mittelfuß mit quadratischem Querschnitt, eine runde, aus sektorenförmigen Teilen zusammengesetzte Tischplatte und einen, sich im mittleren Bereich über dieser Tischplatte erhebenden Aufbau mit topfartiger Verkleidung besitzen.

Die Gestaltung der Tischplatte aus mehreren, sektorförmigen Teilen ermöglicht auf einfache Weise die Demontage einzelner Sektoren, z.B. bei Wartungsarbeiten. Im Mittelfuß des Tisches können gemeinsame, für die Bildfernsprechstelle erforderliche Versorgungseinrichtungen, z.B. Relaisbeikästen, Verteiler, Elektronikbaugruppen, Stromversorgung usw. zweckmäßig untergebracht sein.

Im mittleren Bereich der Tischplatte, unter der topfartigen Verkleidung, können Bildgeräte in Form von kombinierten Baueinheiten mit jeweils einem Bildschirm, einer Aufnahmekamera und einem Lautsprecher sowie eingebauter elektronischer Einrichtungen installiert sein. Auf diese Weise sind nur wenige Montage- und Installationselemente für den lagerichtigen Einbau und den elektrischen Anschluß aller dieser Geräte erforderlich.

Die Mantelfläche der topfartigen Verkleidung ist in den Sichtbereichen der überdeckten Bildgeräte durchbrochen. Ausserdem kann die topfartige Verkleidung an ihrer oberen Deckfläche mit Durchbrüchen versehen oder gitterartig gestaltet sein. Auch die Tischplatte kann in ihrem mittleren Bereich, über dem Mittelfuß eine Öffnung mit innerhalb der topfartigen Abdeckung verlaufenden Kontur bilden. Auf diese Weise ist der Tisch mit einem vertikalen Schacht für den Austritt der Abwärme der eingebauten Geräte versehen.

In der Tischplatte können, jedem Teilnehmerplatz zugeordnet, Bedienungseinrichtungen für die Bild- und Tonbeeinflussung sowie das Mikrofon der Freisprecheinrichtung fest installiert sein. Wenigstens einer der Teilnehmerplätze kann auch mit einem Einzelfernsprecher mit Wähleinrichtung und Handapparat ausgestattet sein.

000835

Einer der Plätze ist schließlich für den Konferenzleiter mit zusätzlichen Bedienungseinrichtungen versehen. Dazu gehört auch ein Kontrollmonitor, auf dem jederzeit das an die Gegenstelle übertragene Bild überprüft werden kann.

Jeder Teilnehmer hat unabhängig vom Konferenzleiter die Möglichkeit, sein Bildgerät vorübergehend auf "Eigenbild" umzuschalten, wodurch er die Teilnehmer der eigenen Bildfernsprechstelle auf dem Bildschirm betrachten kann. Die Eigenbilddarstellung ermöglicht es dem Teilnehmer unter anderem, seine eigene richtige Höhenstellung in der Bildfeldkontur zu überprüfen. Zur Höhenkorrektur können die Sitzgelegenheiten mit Höhenverstellungseinrichtungen versehen sein. Nach einer Weiterbildung der Erfindung können aber auch die Bildgeräte selbst mit einer mechanischen Einstellvorrichtung zur Feinveränderung ihrer Einbaulage versehen sein. Mittels einer solchen Einstellvorrichtung kann die optische Achse der im Bildgerät fest eingebauten Aufnahmeeinrichtung z.B. in einer senkrechten, durch die optische Achse bestimmten Ebene innerhalb eines für die Höhenkorrektur ausreichenden Winkelbereichs verschwenkbar sein. Die Aufnahmeeinrichtung kann damit in ihrer Abbildungshöhe der Sitzhöhe des jeweiligen Teilnehmers angepaßt werden.

Jedes Bildgerät kann weiterhin an der dem Teilnehmer zugewandten Öffnung der Aufnahmeeinrichtung koaxial vor dem Objektiv mit einer halbdurchlässig verspiegelten, zum Teilnehmer hin konvex gewölbten Scheibe ausgestattet sein, auf der auch noch ein auf die optische Achse bezogenes Fadenkreuz oder die Bildfeldkontur aufgebracht sein kann. Das von dieser Scheibe wiedergegebene Spiegelbild ermöglicht dem Teilnehmer ebenfalls eine Kontrolle seiner für die Aufnahme höhen- und

0008350

seitenrichtigen Position.

Für die Übertragung von Dokumentabbildungen kann jedes Bildgerät mit einer zweiten Austrittsöffnung für das Aufnahmeobjektiv versehen sein, deren optische Achse annähernd vertikal auf die Tischfläche gerichtet ist. Die Abbildung von Dokumenten ist auf den Bildschirmen als großformatiges Einzelbild möglich. Die Aufnahmegeräte können weiterhin mit einer Einrichtung zur Veränderung des Abbildungsmaßstabs ausgestattet sein, um Ausschnittsvergrößerungen der vorgelegten Dokumente zu übermitteln. Auf diese Weise hat jeder Teilnehmer die Möglichkeit, von seinem Platz aus allen Konferenzteilnehmern ohne weitere Umstände Dokumente vorzulegen. Selbstverständlich kann auch für die Abbildung der Teilnehmer eine bedarfsweise betätigbare Einzelbildschaltung vorgesehen sein.

Um die unmittelbare Kommunikation der an einer Bildfernsprechstelle zusammensitzendem Konferenzteilnehmer nicht durch die über der Tischfläche installierten Bildgeräte zu beeinträchtigen, können die Bildgeräte um einen Bruchteil ihrer Gesamtbauhöhe in die Tischplatte hineinversenkt angeordnet sein. Die Oberkanten der Bildgeräte lassen sich auf diese Weise so flach über der Tischplatte halten, daß aus normaler Sitzhöhe jeder Teilnehmer sein Gegenüber diagonal über die topfartige Verkleidung der Bildgeräte hinweg unmittelbar sehen kann.

Vor jedem der Bildgeräte kann in diesem Fall ein entsprechender Bereich der Tischfläche als vertiefte, zum Gerät hin abfallend geneigte, seitlich eindeutig begrenzte Rampenfläche ausgebildet sein. Durch die Begrenzungskanten der Rampe kann der Bereich der Auflagefläche für die zur Übermittlung vorgesehenen Dokumente gekennzeichnet sein.

Um die Tischgröße in vertretbaren Grenzen zu halten erscheint es zweckmäßig, die Zahl der auf den Umfang der Tischplatte verteilten Teilnehmerplätze auf vier festzulegen und die den Teilnehmerplätzen zugeordneten Einrichtungen und Geräte vierfach vorzusehen. Es sind dann auf den Bildschirmen gegebenenfalls Einzelporträts von vier Teilnehmern in den vier Quadranten der Bildfläche sichtbar.

Es ist ohne weiteres möglich, an den so geschaffenen vier Konferenzplätzen jeweils mehrere Teilnehmer zu placieren, von denen einer in der Bildachse der Aufnahmekamera sitzt, während die anderen nicht abgebildet werden. Bildschirm und Freisprecheinrichtung steht ihnen jedoch in gleicher Weise zur Verfügung.

Im folgenden sei die Erfindung anhand eines in den Figuren dargestellten Ausführungsbeispiels näher erläutert. Es zeigen:

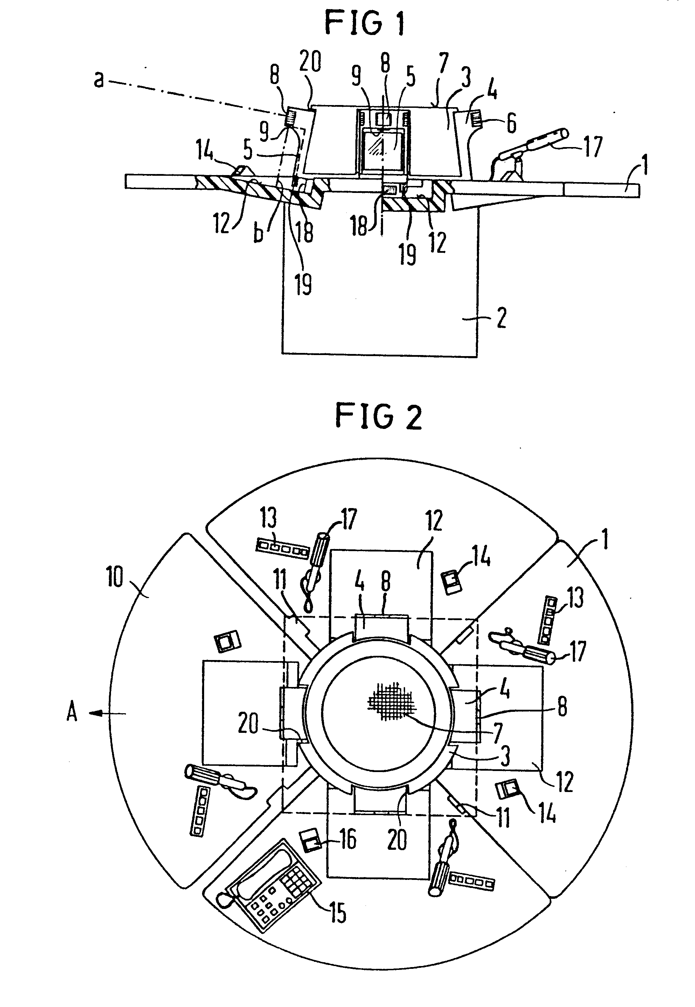

Fig. 1 eine Bildfernsprechstelle in Aufrißdarstellung, teilweise aufgebrochen, und

Fig. 2 die Bildfernsprechstelle nach Fig. 1, in Draufsicht.

Die Bildfernsprechstelle nach der Erfindung ist als kompakte Anschlußeinheit in einen Tisch mit runder Platte 1 eingebaut. Die Platte ist aus sektorförmigen Elementen 10 zusammengesetzt, die jeweils mit einer Grifföffnung 11, zum problemlosen Demontieren, versehen ist. In der Draufsicht ist ein derartiges Element 10 in Richtung des Pfeils A ein Stück aus der Gesamt-Tischplatte herausgezogen dargestellt. In dieser

- 9 -    VPA 78 P 6175 EUR

Art ist die Tischplatte zu Reparatur- und Wartungszwecken bequem ausschnittsweise demontierbar.

Der Tisch besitzt ferner einen als Hohlkörper gestalteten Mittelfuß 2 mit quadratischem Querschnitt, in dem
gemeinsame Einrichtungen der Bildfernsprechstelle untergebracht, sowie einen sich über die Platte erhebenden
Aufbau, in dem unter einer topfartigen Verkleidung 3
mehrere kombinierte Bildgeräte 4 mit Bildschirm 5 und
Aufnahmeeinrichtung 6 vereinigt sind. Die Mantelfläche
der topfartigen Verkleidung ist in den Sichtbereichen
der Bildgeräte dementsprechend mit Ausnehmungen 20 versehen. Die obere Deckfläche 7 des Verkleidungskörpers 3
wird von einem Lüftungsgitter gebildet.

Auch die Tischplatte kann in ihrem mittleren Bereich
unter der topfförmigen Verkleidung mit einem Durchbruch versehen sein. Auf diese Weise ist die Anschlußeinheit mit einem den Fuß 2, die Tischplatte 1 und den
Aufbau 3 durchsetzenden, vertikalen Schacht für die Abwärme versehen.

Die Aufnahmeeinrichtungen 6 der Bildgeräte besitzen
jeweils zwei Austrittsöffnungen 8, 9. Eine 8 ist mit
ihrer optischen Achse a annähernd horizontal auf den
zugeordneten Bedienungsplatz, die andere 9, für die
Übertragung von Dokumenten, mit der optischen Achse b
annähernd vertikal auf die Tischplatte gerichtet. Die
Bildaufnahme erfolgt wahlweise durch eine dieser beiden Öffnungen. Die Austrittsöffnungen 8, 9 befinden
sich im Bildgerät oberhalb des Bildschirms, in einem
über die Bildschirmebene vorspringenden Gehäusebereich
6.

Unter dem Bildschirm, im Sockel der Bildgeräte, ist jeweils ein Lautsprecher 18 für die Freisprecheinrichtung, sowie ein drehbarer Stellknopf 19 zur mechanischen Feinverstellung der Einbaulage des jeweiligen Bildgerätes angeordnet. Die Bildgeräte sind zu einem Bruchteil ihrer Bauhöhe in die Ebene der Tischoberfläche hinein versenkt. Die Tischoberfläche ist deshalb vor jedem Bildgerät mit einer Vertiefung versehen, deren Bodenfläche als zum jeweiligen Bildgerät hin abfallend geneigte Rampe 12 gestaltet ist. Die vertieften Flächen sind gegenüber der restlichen Tischoberfläche scharfkantig abgegrenzt und kennzeichnen auf diese Weise eindeutig die Einlagefläche für Dokumente, die der Aufnahmeeinrichtung ausgesetzt werden sollen.

Jedem Teilnehmerplatz sind auf der Tischfläche gleiche und/oder individuelle Bedienungs- und Kontrolleinrichtungen zugeordnet. Alle Plätze haben z.B. ein Richtmikrofon 17, ein Steuertableau 13 und ein individuelles Kontrollorgan 14. Ein Platz ist für den Konferenzleiter darüberhinaus mit einem in die Platte versenkten Fernsprecher 15 mit Handapparat und Wähleinrichtung versehen. Als Kontrollorgan ist dieser Platz mit einem zusätzlichen Monitor 16 ausgestattet, auf dem jederzeit das von der Bildfernsprechstelle abgehende Bild beobachtet werden kann.

9 Patentansprüche
2 Figuren

Patentansprüche

1. Bildfernsprechstelle für Bildfernsprech-Konferenzeinrichtungen, mit einem Tisch mit mehreren Teilnehmerplätzen, weiterhin mit Einrichtungen zur Bildaufnahme und -wiedergabe, zur Tonaufnahme und -wiedergabe, zur Übertragung von Bild und Ton, zur Steuerung und Stromversorgung sowie zur manuellen Bedienung, und mit einer internen Verkabelung, d a d u r c h  g e k e n n z e i c h n e t , daß die Teilnehmerplätze in gleichmäßig auf den Umfang des Tisches verteilten Bereichen einer vorzugsweise runden Tischplatte (1) eingerichtet und mehrere Geräte (4) für die Bildaufnahme und -wiedergabe im mittleren Bereich über der Tischplatte, den Teilnehmerplätzen zugeordnet, installiert sind und daß mit den Bildwiedergabegeräten, durch Unterteilung des Bildschirms (5) in eine Anzahl gleich großer, annähernd quadratischer Teilflächen, jeweils sämtliche von den einzelnen Teilnehmerplätzen einer Bildfernsprechstelle übermittelten Bilder gleichzeitig darstellbar sind.

2. Bildfernsprechstelle nach Anspruch 1 , d a d u r c h g e k e n n z e i c h n e t , daß der Tisch einen als Hohlkörper mit wenigstens einer abnehmbaren Seitenfläche ausgebildeten Mittelfuß (2) mit quadratischem Querschnitt, eine aus sektorenförmigen Teilflächen zusammengesetzte runde Tischplatte (1) und einen sich im mittleren Bereich über der Tischplatte erhebenden Aufbau mit topfartiger Verkleidung (3) besitzt.

3. Bildfernsprechstelle nach Anspruch 1 , d a d u r c h g e k e n n z e i c h n e t , daß die Bildgeräte (4) in Form von kombinierten Baueinheiten mit Bildschirm (5), Aufnahmekamera (6), Lautsprecher (18) und eingebauten elektronischen Einrichtungen installiert sind.

4. Bildfernsprechstelle nach Anspruch 2, d a d u r c h g e k e n n z e i c h n e t , daß die topfartige Verkleidung (3) an ihrer oberen Deckfläche (7) mit mehreren Durchbrüchen, und die Tischplatte im mittleren Bereich mit einer von der topfartigen Verkleidung überdeckten Öffnung versehen ist.

5. Bildfernsprechstelle nach Anspruch 3, d a d u r c h g e k e n n z e i c h n e t , daß jedes Bildgerät mit einer mechanischen Einstelleinrichtung (19) zur manuellen Feinveränderung seiner Einbaulage versehen ist.

6. Bildfernsprechstelle nach Anspruch 3, d a d u r c h g e k e n n z e i c h n e t , daß jedes Bildgerät an der dem Teilnehmer zugewandten Öffnung (8) der Aufnahmeeinrichtung koaxial vor dem Objektiv mit einer halbdurchlässig verspiegelten, zum Teilnehmer hin konvex gewölbten Abdeckscheibe ausgestattet ist.

7. Bildfernsprechstelle nach Anspruch 3, d a d u r c h g e k e n n z e i c h n e t , daß jedes Bildgerät mit einer zweiten Austrittsöffnung (9) für das Aufnahmeobjektiv versehen ist, deren optische Achse annähernd vertikal auf die Tischfläche gerichtet ist.

8. Bildfernsprechstelle nach Anspruch 3, d a d u r c h g e k e n n z e i c h n e t , daß die Bildgeräte um einen Bruchteil ihrer Gesamtbauhöhe in die Tischplatte hinein versenkt angeordnet sind.

9. Bildfernsprechstelle nach Anspruch 8, d a d u r c h g e k e n n z e i c h n e t , daß vor jedem Bildgerät ein entsprechender Bereich der Tischfläche als vertiefte, zum Gerät hin abfallend geneigte, seitlich eindeutig begrenzte Rampe (12) ausgebildet ist.

**FIG 1**

**FIG 2**

## EUROPÄISCHER RECHERCHENBERICHT

Europäisches Patentamt

Nummer der Anmeldung

EP 79 10 2352

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | TELCOM REPORT, Vol. 1, Nr. 4, August 1978, Seiten 219-225 München, DE. P. KLEIN et al.: "Bildkonferenzen- eine neue Kommunikationsform" <br><br> * Seite 223, Mittelspalte, Zeile 38 - Seite 224, rechte Spalte, Zeile 12 * <br><br> -- | 1-3, 7,8 |
| | NACHRICHTENTECHNISCHE ZEITSCHRIFT, Vol. 30, Nr. 3, März 1977 Berlin, DE. P. KLEIN: "Fernsprech-Bildkon- ferenz", Seiten 239-244 <br><br> * Seite 244, linke Spalte, Zeile 18 - rechte Spalte, Zeile 1 * <br><br> -- | 1 |
| | DE - A - 2 640 019 (SIEMENS A.G.) <br><br> * Seite 1, Anspruch 1; Seite 7, Zeilen 6-31 * <br><br> -- | 1 |
| | DE - A - 2 319 798 (SIEMENS A.G.) <br><br> * Seite 8, Anspruch 1 * <br><br> -- | 1,3,7 |
| A | DE - A - 2 523 477 (SIEMENS A.G.) <br><br> * Seite 1, Zeilen 1-12 * <br><br> -- | 7 |
| A | US - A - 3 601 530 (EDSON) <br><br> * Spalte 3, Zeile 1 - Spalte 5, Zeile 60 * <br><br> -- ./. | 1 |

Der vorliegende Recherchenbericht wurde für alle Patentansprüche erstellt.

**KLASSIFIKATION DER ANMELDUNG (Int.Cl. 3)**

H 04 N 7/14

**RECHERCHIERTE SACHGEBIETE (Int. Cl. 3)**

H 04 N 7/14

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

| Recherchenort | Abschlußdatum der Recherche | Prüfer |
|---|---|---|
| Den Haag | 26-11-1979 | VERSCHELDEN |

EPA form 1503.1 06.78

| | Europäisches Patentamt | EUROPÄISCHER RECHERCHENBERICHT | | |
|---|---|---|---|---|

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | JAPAN TELECOMMUNICATIONS REVIEW, Vol. 18, Nr. 3, Juli 1976, Seiten 145-151 Tokyo, JP. K. HIRATSUKA et al.: "Video Conference System" <br><br> * Seite 148, rechte Spalte, Zeile 17 - Seite 150, linke Spalte, Zeile 8 * <br><br> -- | 1 | |
| A | DE - A - 2 151 919 (ENGINS MATRA) <br><br> * Seite 8, Anspruch 5 * <br><br> -- | 6 | RECHERCHIERTE SACHGEBIETE (Int. Cl. 3) |
| A | REVIEW OF THE ELECTRICAL COMMUNICATION LABORATORIES, Vol. 25, Nr. 1-2, Januar-Februar 1977, Seiten 61-70 Tokyo, JP. H. HORITAKE et al.: "New Model Video Telephone Set Design" <br><br> * Seite 62, rechte Spalte, Zeilen 22-24; Seite 64, rechte Spalte, Zeilen 16-26 * <br><br> ---- | 5 | |

EPA Form 1503.2 06.78